# EUROPÄISCHE PATENTSCHRIFT

(11) **EP 1 832 946 B1**
(45) Veröffentlichungstag und Bekanntmachung des Hinweises auf die Patenterteilung: **22.09.2010**
(21) Anmeldenummer: 07004324.5
(22) Anmeldetag: 02.03.2007
(51) Int. Cl.: G05B 19/042, H04L 12/40

(54) **Verfahren und System zur Übertragung von zyklischen und azyklischen Daten über einen gemeinsamen Übertragungskanal.**
Method and system for transmitting cyclically and acyclically data via a common transmission channel
Procédé et système de transmission de données cycliques et acycliques par un canal de transmission commun

(30) Priorität: 10.03.2006 DE 102006011524
(43) Veröffentlichungstag der Anmeldung: 12.09.2007
(73) Patentinhaber: Phoenix Contact GmbH & Co. KG, 32825 Blomberg (DE)
(72) Erfinder: Oster, Viktor, 32825 Blomberg (DE); Schmidt, Joachim, 31812 Bad Pyrmont (DE)
(74) Vertreter: Blumbach - Zinngrebe

(56) Entgegenhaltungen:
- EP-A- 1 585 266
- EP-A2- 1 178 632
- DE-A1- 10 206 904
- US-A- 5 321 694
- US-A- 5 327 428

## Beschreibung

Die Erfindung betrifft ein Verfahren sowie ein System zur Übertragung von Daten eines zyklisch zu übertragenden Datentyps und eines azyklisch übertragbaren Datentyps über einen gemeinsamen Übertragungskanal von einer ersten an den Übertragungskanal angeschalteten Teilnehmereinheit an wenigstens eine weitere an den Übertragungskanal angeschaltete Teilnehmereinheit.

Es gibt verschiedene Anwendungsgebiete für Kommunikations- oder Übertragungssysteme, bei denen Daten eines bestimmten Datentyps zyklisch übertragen werden.

So gibt es z.B. Anwendungsgebiete, bei denen durch das zyklische Übertragen von Daten eines bestimmten Datentyps das Bestehen einer Datenübertragungsverbindung des Kommunikations- oder Übertragungssystems kontinuierlich überprüft wird.

Ergänzend oder alternativ umfassen Daten eines zyklisch zu übertragenden Datentyps auf den Gebieten der Prozesssteuerung und -regelung herkömmlicherweise jeweils prozessspezifische Prozessdaten, die in regelmäßigen Abständen aktualisiert und den an dem Prozess beteiligten Teilnehmereinheiten über entsprechende Kommunikations- oder Übertagungssysteme zur Verfügung gestellt werden müssen, um einen bestimmten Prozess entsprechend den Anforderungen zu kontrollieren.

Derartige Prozessdaten sind beispielsweise innerhalb eines Master-Slave-Systems mittels Sensoren, wie beispielsweise Messfühler an einer Slave-Teilnehmereinheit, zyklisch erfasste IN-Prozessdaten bzw. Prozesseingangsdaten, die an eine Master-Teilnehmereinheit zur weiteren Bearbeitung übertragen werden, und von einer Master-Teilnehmereinheit berechnete OUT-Prozessdaten bzw. Prozessausgangsdaten, die wiederum an mit Aktoren, wie beispielsweise Stellgliedern und/oder Antrieben, kommunizierenden Teilnehmereinheiten zur entsprechenden Ansteuerung der Aktoren übertragen werden. Sobald derartige Prozessdaten für einen zu steuernden Prozess relevant sind, müssen diese folglich zyklisch übertragen werden. Eine besondere Relevanz derartiger Prozessdaten findet sich bei Anwendungen in Bereichen der Sicherheitstechnik, bei denen applikationsspezifische sicherheitsrelevante Prozesseingangs- und/oder Prozessausgangsdaten regelmäßig über sicherheitsrelevante Teilnehmereinheiten erfasst bzw. über sicherheitsrelevante Teilnehmereinheiten ausgegeben werden müssen, um sicherheitskritische Fehler während eines Prozessablaufs, welche unter Umständen auch eine Gefahr für den Menschen darstellen können, frühestmöglich erkennen zu können und einen fehlerhaften Prozess oder Teilprozess innerhalb kurzer Reaktionszeiten gegebenenfalls in einen sicheren Zustand zu fahren.

Daten eines azyklisch übertragbaren Datentyps sind zum Beispiel Diagnosedaten oder Quittungsdaten, die lediglich im Bedarfsfall oder auf Anforderung übertragen werden. Üblicherweise werden jedoch bei Übertragung derartiger Daten die Zeitpunkte der Übertragung von Daten eines zyklisch zu übertragenden Datentyps, wie z.B. von Prozessdaten, verändert und damit für viele Anwendungen unzulässig gestört. Eine solche Änderung der Zeitpunkte der Übertragung von Daten eines zyklisch zu übertragenden Datentyps ist beispielsweise bei Anwendungen unzulässig, die eine zeitäquidistante Übertragung erfordern, wie dies insbesondere in der Sicherheitstechnik der Fall ist. Ferner werden herkömmlicherweise durch die Übertragung von Daten eines azyklischen Datentyps, wie beispielsweise Diagnosedaten oder auch Quittungsdaten, die Worst-Case-Reaktionszeiten des Übertragungssystems verlängert, welches ebenfalls, insbesondere auf den Gebieten der Sicherheitstechnik, von großer Relevanz ist. Darüber hinaus ist, insbesondere, wenn zur Übertragung von Daten eines azyklisch übertragbaren Datentyps der gleiche Übertragungsweg oder -kanal wie für die Übertragung von Daten eines zyklisch zu übertragenden Datentyps verwendet wird, kaum noch eine Deterministik bei der Übertragung von Daten über den Übertragungskanal gegeben.

Die US-A-5 327 428 beschreibt eine sogenannte selbstanpassende Übertraqungsdatenstruktur, welche basierend auf zwei sich überlagernden Übertragungsdateninfrastrukturen für drei verschiedene Verkehrstypen (isochron, synchron und asynchron), die sich vor allem hinsichtlich der Ende-zu-Ende-Laufzeit bzw. Latenzzeit unterscheiden, jeweils einen entsprechenden Übertragungsdienst auf einem gemeinsamen Übertragungsmedium bietet. Dabei wird die Übertragungskapazität bedarfsabhängig, dynamisch und gemäß den jeweiligen Obertragungsanforderungen zwischen den verschiedenen Verkehrstypen bzw. Übertragungsdiensten aufgeteilt.

Bei den zwei Übertragungsdateninfrastrukturen handelt es sich um eine durchschaltvermittelnde und eine paketvermittelnde Dateninfrastruktur, die sich vor allem darin unterscheiden, dass die Datenplätze der durchschaltvermittelnden Dateninfrastruktur bei der Übertragung an feste Positionen innerhalb einer zeitintervallabhängigen Rahmungsperiode von bspw. 125 µs gebunden sind und nur dem isochronen Übertragungsdienst zur Verfügung stehen, während die Datenplätze der paketvermittelnden Dateninfrastruktur frei, positionsungebunden und mit variablen Abständen zueinander übertragen und vom synchronen sowie vom asynchronen Übertragungsdienst genutzt werden können. Es ist gemäß US-A-5 327 428 einerseits vorgesehen, die synchronen und asynchronen Datenplätze an solchen Positionen innerhalb einer Rahmungsperiode zu übertragen, die noch nicht von isochronen Datenplätzen belegt sind. Andererseits werden isochrone Datenplätze nur bedarfsweise bereitgestellt und übertragen. Bei Bedarf für eine durchschaltvermittelte Verbindung, einen sogenannten isochronen Kanal, werden an einer bestimmten Position innerhalb jeder Rahmungsperiode die dort befindlichen asynchronen Datenplätze durch isochrone Datenplätze ersetzt, wobei asynchrone Datenplätze, die Daten enthalten, in einem Pufferspeicher verzögert werden. Die US-A-5 327 428 beschreibt jedoch auch die Möglichkeit, isochrone Datenplätze durch Verzögern in einem Pufferspeicher auf andere Positionen innerhalb einer Rahmungsperiode zu verlegen, um so beispielsweise Platz zu schaffen, für einen weiteren isochronen Kanal, der je Rahmungsperiode mehrere aneinandergrenzende Datenplätze benötigt.

Die US-A-5 321 694 beschreibt ein Verfahren und eine Vorrichtung zur Reduzierung des Flusses bzw. der Anzahl von Rundsende-Dataqrammen (Broadcast-Datagrammen), die zwischen lokalen Netzwerken (LANs), welche über eine Nachrichtenverbindung verbunden sind, übertragen werden. Dabei überträgt auf der einen Seite eine Sendevorrichtung des einen Netzwerks nur die Rundsende-Datagramme über die Nachrichtenverbindung an ein anderes Netz, die nicht redundant sind, das heißt die nicht bereits früher übertragen wurden, während redundante Rundsende-Data ramme verworfen werden. Auf der anderen Seite stellt eine Empfangsvorrichtung des anderen Netzwerks einen gleichwertigen Fluss redundanter Rundsende-Datagramme durch Kopieren eines empfangenen Rundsende-Datagramms zur Verfügung.

Eine Aufgabe der Erfindung ist es, einen Weg zur Übertragung von Daten eines azyklisch übertragbaren Datentyps, wie beispielsweise Diagnosedaten, während einer bestimmten Anwendung aufzuzeigen ohne die Übertragung von für diese bestimmte Anwendung relevanten Daten eines zyklisch zu übertragenden Datentyps, wie. z.B. für die Anwendung einer Prozesssteuerung oder -regelung relevante Prozessdaten, zu stören.

Die erfindungsgemäße Lösung ist durch ein Verfahren sowie durch ein System mit den Merkmalen des jeweiligen unabhängigen Anspruchs gegeben.

Vorteilhafte und/oder bevorzugte Ausführungsformen und Weiterbildungen sind Gegenstand der jeweiligen Unteransprüche.

Erfindungsgemäß ist somit vorgesehen, ein auf einer protokollspezifisch zyklischen Übertragungsabfolge von Übertragungstelegrammen zur Übertragung von Daten eines zyklisch zu übertragenden Datentyps über einen Übertragungskanal basierendes Verfahren weiterzubilden und an wenigstens einer bestimmten Stelle innerhalb der protokollspezifisch zyklischen Übertragungsabfolge, die mit dem unmittelbar zuvor übertragenen Übertragungstelegramm übertragenen Daten des zyklisch zu übertragenden Datentyps gegenüber den Daten des zyklisch zu übertragenden Datentyps, die für das unmittelbar bevorstehende Übertragungstelegramm bereitgestellt werden, auf Redundanz und Aktualität zu überprüfen. Bei Erkennen eines solchen bevorstehenden Übertragungstelegramms, für welches redundante Daten des zyklisch zu übertragenden Datentyps ohne neuen Informationsgehalt bereitgestellt werden, werden anstelle dieser Daten in den für Daten dieses zyklisch zu übertragenden Datentyps vorgesehenen Datenbereich Daten eines azyklisch übertragbaren Datentyps eingefügt.

Folglich ist durch die Festlegung einer bestimmten stelle innerhalb der Übertragungsabfolge, nach welcher gegebenenfalls ein Übertragungstelegramm mit Daten eines azyklisch übertragbaren Datentyps übertragen wird, in vorteilhafter Weise gewährleistet, dass Daten eines azyklisch übertragbaren Datentyps nur an einem definierten Rang oder innerhalb definierter Zeitschlitze innerhalb der protokollspezifisch zyklischen Übertragungsabfolge übertragen werden. Auch in diesem Fall bleibt somit die Äquidistanz und Deterministik bei der Übertragung von Daten des zyklisch zu übertragenden Datentyps, insbesondere von Prozessdaten, erhalten, da von Seiten der empfangenen Teilnehmereinheit auch auf die redundanten, jedoch nicht übertragenen Daten des zyklisch zu übertragenden Datentyps geschlossenen werden kann. Darüber hinaus ist gewährleistet, dass die Übertragung von Daten des azyklisch übertragbaren Datentyps mit der selben Sicherheit wie die Daten des zyklisch zu übertragenden Datentyps erfolgt.

Die Erfindung sieht ferner vor, dass die Prüfung auf Redundanz und Aktualität von Daten eines zyklisch zu übertragenden Datentyps innerhalb einer bestimmten zyklischen Übertragungsabfolge von Übertragungstelegrammen sowie das Einfügen von Daten eines azyklisch zu übertragenden Datentyps innerhalb dieser zyklischen Übertragungsabfolge von Übertragungstelegrammen jeweils durch die Teilnehmereinheit durchgeführt wird, welche die Daten des zyklisch zu übertragenden Datentyps für diese bestimmte zyklische Übertragungsabfolge von Übertragungstelegrammen produziert oder bereitstellt. Da somit das Zwischenschalten einer weiteren Einheit, z.B. einer Master-Teilnehmereinheit, als Prüf- und/oder Entscheidungsinstanz entfällt, ist im Wesentlichen jegliche Verzögerung bei der Datenübertragung eines zyklisch zu übertragenden Datentyps ausgeschlossen.

Zweckmäßigerweise ist vorgesehen, jedem Übertragungstelegramm eine bestimmte Stelle innerhalb der protokollspezifisch zyklischen Übertragungsabfolge eindeutig zuzuweisen und ein jeweils empfangenes Übertragungstelegramm auf dessen zugewiesene Stelle hin zu überprüfen. Hierdurch ist auf einfache Weise eine Maßnahme bereitgestellt, im wesentlichen echtzeitfähig während der protokollspezifisch zyklischen Übertragungsabfolge von Übertragungstelegrammen diese hinsichtlich einer falschen Reihenfolge, eines Verlusts einer Einfügung und/oder einer Wiederholung von Übertragungstelegrammen zu prüfen, welches insbesondere bei der Übertragung von Daten eines zyklisch zu übertragenden, sicherheitsrelevanten Datentyps bei der Anwendung des Verfahrens für einen sicherheitskritischen Prozess besonders zweckmäßig ist.

Zur Kennzeichnung und Identifizierung der innerhalb einer zyklischen Übertragungsabfolge einem Übertragungstelegramm zugewiesenen Stelle wird bevorzugt ein vorgegebener Bestandteil im Übertragungstelegramm eingefügt.

In weiterer zweckmäßiger Ausgestaltung der Erfindung ist ferner vorgesehen, dass bei Übertragung des in der Übertragungsabfolge festgelegten Übertragungstelegramms, welches auch zur Übertragung von Daten eines azyklisch übertragbaren Datentyps verwendet wird, in Reaktion auf das Einfügen von Daten eines azyklisch übertragbaren Datentyps der für dieses Übertragungstelegramm zur Kennzeichnung und Identifizierung vorgegebene Bestandteil durch einen anderen vorgegebenen Bestandteil ersetzt wird.

Hierdurch wird ermöglicht, dass die Kennzeichnung und Identifizierung einer Übertragung von Daten eines azyklisch übertragbaren Datentyps ohne die Verwendung zusätzlicher Kennzeichnungsbits erfolgen kann.

Gemäß einer praktischen Ausführungsform ist hierfür ferner vorgesehen, dass die Anzahl der vorgegebenen Bestandteile durch die Summe der Anzahl der in einer Übertragungsabfolge zu übertragenden Übertragungstelegramme und der Anzahl von in dieser Übertragungsabfolge möglichen Übertragungstelegrammen, welche auch zur Übertragung von Daten eines azyklisch übertragbaren Datentyps verwendet werden, berechnet wird. Dies hat den Vorteil, dass von vornherein auf einfache Weise festgelegt wird, in welchen Fällen innerhalb einer Übertragungsabfolge überhaupt die Möglichkeit besteht, Daten eines azyklisch übertragbaren Datentyps zu übertragen.

Gemäß bevorzugter Ausführungsformen wird ferner vorgeschlagen, dass als vorgegebene Bestandteile kodierte Laufnummern verwendet werden, wobei gemäß bevorzugter weiterbildung für Übertragungstelegramme, die Daten eines azyklisch übertragbaren Datentyps enthalten, eine Änderung der Codierung zur weiter vereinfachten Identifizierung eines solchen Übertragungstelegramms vorgenommen wird.

Hierdurch können durch ein Übertragungstelegramm, welches Daten eines azyklisch übertragbaren Datentyps beinhaltet, gleichzeitig die zu diesem zeitpunkt gültigen, jedoch nicht geänderten Daten des zyklisch zu übertragenden Datentyps implizit mit übertragen werden, so dass an den Empfänger eines solchen Übertragungstelegramms eine lückenlose Übertragung auch der Daten des zyklisch zu übertragenden Datentyps erfolgt.

Zur zeitnahen Fehlererkennung ist ferner vorgesehen, dass die Teilnehmereinheiten über jeweils empfangene Daten eine Prüf- oder Checkinformation bilden und diese mit einer an den empfangenen Daten angehängten Prüf- oder Checkinformation vergleichen.

Bevorzugt ist vorgesehen, dass als Daten eines zyklisch zu übertragenden Datentyps innerhalb einer zyklischen Übertragungsabfolge von Übertragungstelegrammen in Abhängigkeit der jeweiligen ersten Teilnehmereinheit Prozesseingangs- oder Prozessausgangsdaten bereitgestellt werden und als Daten eines azyklisch zu übertragenden Datentyps Diagnose-, Anfrage-, Antwort und/oder Quittungsdaten generiert werden.

Das erfindungsgemäße Verfahren ist somit insbesondere bei Kommunikations- oder Übertragungssystemen zur Steuerung oder Regelung von Prozessen oder auch Teilprozessen einsetzbar.

Die Erfindung eignet sich somit insbesondere auch für Übertragungssysteme zur Übertragung von zur Steuerung oder Regelung von sicherheitskritischen Prozessen oder Teilprozessen sicherheitsrelevanten Prozessdaten, so dass zur Durchführung des erfindungsgemäßen Verfahrens insbesondere ein Übertragungssystem mit zur Durchführung angepassten sicherheitsrelevanten Teilnehmereinheiten vorgesehen ist.

Insbesondere ist vorgesehen, dass ein solches Übertragungssystem mit wenigstens einer Teilnehmereinheit ausgebildet ist, die zur Übertragung von Übertragungstelegrammen mit Daten eines zyklisch zu übertragenden Datentyps innerhalb einer protokollspezifisch zyklischen Übertragungsabfolge derartiger Übertragungstelegramme zu wenigstens einer weiteren, an einen Übertragungskanal angeschalteten Teilnehmereinheit sowie zum Einfügen eines vordefinierten Bestandteils in das jeweils zu übertragende Übertragungstelegramm zum eindeutigen Kennzeichnen und Identifizieren des Übertragungstelegramms innerhalb der protokollspezifisch zyklischen Übertragungsabfolge angepasst ist. Diese wenigstens eine derart angepasste Teilnehmereinheit ist ferner angepasst, in Reaktion auf die erfolgte Übertragung wenigstens eines bestimmten, innerhalb der Übertragungsabfolge jeweils an selber Stelle übertragenen Übertragungstelegramms eine Prüfung der Daten des zyklisch zu übertragenden Datentyps, welche für das als nächstes in der Übertragungsabfolge zu übertragende Übertragungstelegramm bereitgestellt sind, gegenüber den Daten des zyklisch zu übertragenden Datentyps dieses bestimmten Übertragungstelegramms auf Redundanz und Aktualität durchzuführen, sowie zum Generieren von Daten eines azyklisch zu übertragenden Datentyps und zum Einfügen dieser Daten anstelle der geprüften Daten des zyklisch zu übertragenden Datentyps in den für diese Daten vorgesehenen Datenbereich in Reaktion auf das Erkennen der geprüften Daten als redundante Daten ohne neuen Informationsgehalt.

Anwendungsspezifisch können derartige Teilnehmereinheiten z.B. als Master oder Slave ausgebildet sein.

Diese und weitere Merkmale sowie weitere damit einhergehende Vorteile der Erfindung ergeben sich aus der nachfolgenden Beschreibung einer bevorzugten, jedoch lediglich beispielhaften Ausführungsform unter Bezugnahme auf die beigefügten Zeichnungen.

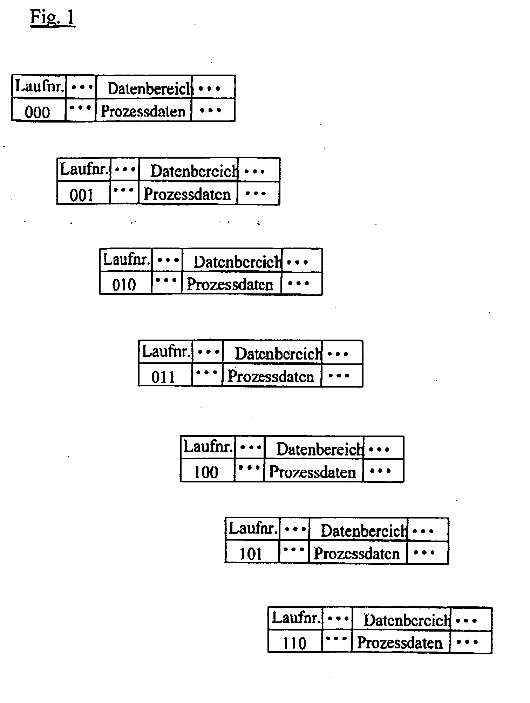

In den Figuren zeigen
- Figur 1: skizzenhaft einen Zyklus einer beispielhaften, protokollspezifisch zyklischen Übertragungsabfolge von Übertragungstelegrammen mit darin eingebetteten, zyklisch zu übertragenden Prozessdaten in einem zur Übertragung von Daten eines zyklisch zu übertragenden Datentyps vorgesehenen Datenbereich, und

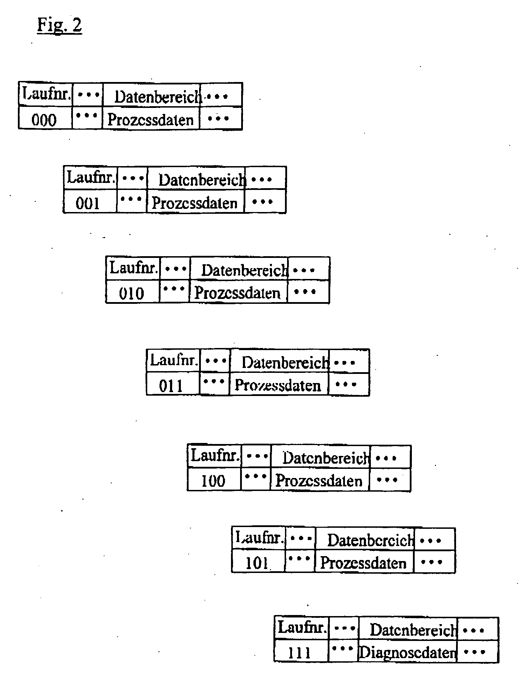

- Figur 2: einen Zyklus der beispielhaften, protokollspezifisch zyklischen Übertragungsabfolge gemäß Figur 1, jedoch mit einem Übertragungstelegramm innerhalb der Abfolge, welches gemäß der Erfindung in dem zur Übertragung von Daten des zyklisch zu übertragenden Datentyps vorgesehenen Datenbereich anstelle Daten dieses Datentyps, Daten eines azyklisch übertragbaren Datentyps enthält.

Figur 1 zeigt skizzenhaft einen erfindungsgemäßen Zyklus einer protokollspezifisch zyklischen Übertragungsabfolge von Übertragungstelegrammen zur Übertragung von Daten eines zyklisch zu übertragenden Datentyps innerhalb eines dafür vorgesehenen Datenbereichs, gemäß vorliegendem Beispiel zur zyklischen Übertragung von Prozessdaten, über einen nicht dargestellten Übertragungskanal von einer ersten an den Übertragungskanal angeschalteten Teilnehmereinheit an wenigstens eine weitere an den Übertragungskanal angeschaltete Teilnehmereinheit.

Die innerhalb einer solchen Übertragungsabfolge übertragenen Übertragungstelegramme enthalten eine durch 3 Bits codierte laufende Nummer, über welche die Stelle bzw. der Zeitschlitz innerhalb einer jeweiligen zyklischen Übertragungsabfolge eindeutig identifiziert wird. Grundsätzlich entspricht folglich eine solche 3Bit-Codierung, d.h. von "000" bis "111" den Laufnummern 0 bis 7, so dass also eine Anzahl von 8 Laufnummern gegeben ist.

Grundsätzlich würden folglich 8 Übertragungstelegramme zyklisch aufeinander wie folgt übertragen werden: 0, 1, 2, 3 , 4, 5, 6, 7, 0, 1, 2, 3, 4, 5, 6, 7,... bzw. basierend auf der 3Bit-Codierung 000, 001, 010, 011, 100, 101, 110, 111, 000, 001, 010, 011, 100, 101, 110, 111,...

Um erfindungsgemäß innerhalb einer solchen Übertragungsabfolge nunmehr Daten eines azyklisch übertragbaren Datentyps, wie z.B. Diagnosedaten, zu einem bestimmten Zeitschlitz bzw. an einer vorbestimmten Stelle innerhalb der Übertragungsabfolge, wie bei Figur 2 dargestellt, zu übertragen, ist die Anzahl der Laufnummern auf 7 herabgesetzt.

Gemäß Fig. 1 entspricht die 3Bit-Codierung "000" somit weiterhin der Laufnummer 0 und kennzeichnet das in einer Übertragungsabfolge von Übertragungstelegrammen erste Übertragungstelegramm mit Prozessdaten. Die 3Bit-Codierungen "001", "010", "011", "100", "101", und "110" entsprechen der laufenden Nummer 1, 2, 3, 4, 5, bzw. 6 und kennzeichnen folglich das zweite, dritte, vierte, fünfte, sechste bzw. siebte Übertragungstelegramm mit Prozessdaten innerhalb einer jeweiligen Übertragungsabfolge von Übertragungstelegrammen mit Prozessdaten.

Ohne die Übertragung von Daten eines azyklisch übertragbaren Datentyps werden gemäß Fig. 1 somit diese 7 Übertragungstelegramme zyklisch aufeinander wie folgt übertragen: 0, 1, 2, 3 , 4, 5, 6, 0, 1, 2, 3, 4, 5, 6,... bzw. basierend auf der 3Bit-Codierung 000, 001, 010, 011, 100, 101, 110, 000, 001, 010, 011, 100, 101, 110,....

Ändern sich die von der sendenden Teilnehmereinheit bereitgestellten Prozessdaten nunmehr von der Laufnummer 5 zur Laufnummer 6 nicht, so können mit der Laufnummer 6 von dieser Teilnehmereinheit generierte Daten eines azyklisch übertragbaren Datentyps, wie z.B. Anforderungsdaten, Quittungsdaten, Diagnosedaten oder eines anderen azyklisch übertragbaren Datentyps übertragen werden.

Zur Kennzeichnung einer Übertragung derartiger Daten eines azyklisch übertragbaren Datentyps wird, wie bei Figur 2 zur Übertragung von Diagnosedaten dargestellt, die laufende Nummer 6 des siebten Übertragungstelegramms in dieser Übertragungsabfolge als "111" codiert. Das mit der "111" codierten Laufnummer 6 übertragene Übertragungstelegramm enthält somit Diagnosedaten und zusätzlich implizit die zu diesem Zeitpunkt gültigen Prozessdaten.

Der zur Kennzeichnung der Übertragung von Daten eines azyklisch übertragbaren Datentyps vorgesehene Bestandteil eines hierfür in der Übertragungsabfolge definierten Übertragungstelegramms folgt somit bei dem vorliegenden Ausführungsbeispiel in Abhängigkeit von der laufenden Nummer zur Kennzeichnung und Identifizierung eines jeweiligen Übertragungstelegramms während einer Übertragungsabfolge durch eine geänderte Codierung, d.h. ohne die Verwendung zusätzlicher Bits. Bei dem vorliegenden Beispiel besteht somit nur in einem von 2³ Fällen überhaupt die Möglichkeit zur Übertragung von Daten eines azyklisch übertragbaren Datentyps, welches insbesondere im Fall zyklisch zu übertragender, sicherheitsrelevanter Prozessdaten einer weiteren Priorisierung derartiger Prozessdaten dient. Die Echtzeitfähigkeit in sicherheitsrelevanten Protokollen, wie z.B. beim INTERBUS-Safety-Protokoll, bleibt somit stets erhalten.

Würde auch zwischen zwei anderen, vorher nicht festgelegten laufenden Nummern, in denen sich die Prozessdaten nicht geändert haben, eine Übertragung von Daten eines azyklisch übertragbaren Datentyps erfolgen, so würde beispielsweise die Sicherheitsmaßnahme "Laufende Nummer" nicht wirken können und in der Regel würde das System dann abschalten. Im einzelnen dient die Sicherheitsmaßnahme "Laufende Nummer" insbesondere gegen eine falsche Reihenfolge, gegen das Einfügen, gegen den Verlust und/oder gegen die Wiederholung von Übertragungstelegrammen innerhalb eines Zyklusses der protokollspezifisch zyklischen Übertragungsabfolge.

Ferner gewährleistet eine solche erfindungsgemäße Datenübertragung bei der Übertragung von Daten eines azyklisch übertragbaren Datentyps die selbe Sicherheit wie die zyklische Datenübertragung von Prozessdaten. Darüber werden bei sich ändernden Daten des zyklisch zu übertragenden Datentyps auch nur derartige Daten übertragen und somit auch keine Daten eines azyklisch übertragbaren Datentyps. Folglich ist weiterhin eine hohe Sicherheit gegenüber eine Verfälschung von Daten gegeben.

Allgemein umfasst die Erfindung somit Ausführungsformen, bei denen bestimmte Bestandteile der Übertragungstelegramme durch eine Änderung der Codierung herangezogen werden, um ein Unterscheidungsmerkmal zu bilden, ob in dem jeweiligen Übertragungstelegramm zyklisch zu übertragende Daten, also insbesondere Prozessdaten, oder azyklisch übertragbare Daten, wie z.B. Anfrage-, Antwort-, Quittierungs- und/oder Diagnosedaten, übertragen werden. Der ursprünglich durch die Bestandteile darstellbare Wertebereich wird hierdurch zwar verkleinert, welches bei der Wahl des Bestandteils zweckmäßigerweise zu berücksichtigen ist. Auf der anderen Seite werden hierdurch auch bei der Übertragung von Daten eines azyklisch übertragbaren Datentyps implizit auch stets nicht geänderte Prozessdaten an die empfangene Teilnehmereinheit übertragen, so dass für diese somit eine lückenlose Übertragung von Prozessdaten sicher gestellt ist.

Die vorliegende Erfindung findet somit insbesondere bei in der Sicherheitstechnik eingesetzten Kommunikations- oder Übertragungssystemen, wie beispielsweise dem Interbus-Safety System, mit sicherheitsrelevanten Teilnehmereinheiten Anwendung.

Zweckmäßigerweise ist somit ferner jeweils ein Telegrammbereich in jedem Übertragungstelegramm zum Anhängen einer Prüf- oder Checkinformation vorgesehen, so dass zur zeitnahen Fehlererkennung empfangende Teilnehmereinheiten über die mit einem solchen Übertragungstelegramm jeweils empfangenen Daten eine Prüf- oder Checkinformation bilden und diese mit der an den empfangenen Daten angehängten Prüf- oder Checksumme vergleichen können. Hierzu kann z.B. ein an sich bekanntes CRC-Verfahren eingesetzt werden.

Im Rahmen der Erfindung kann somit der weitere Aufbau eines Übertragungstelegramms anwendungsspezifisch variieren.

Werden unterschiedliche protokollspezifisch zyklische Übertragungsabfolgen von Übertragungstelegrammen zur Übertragung von zyklisch zu übertragenden Daten über einen Übertragungskanal durchgeführt, um z. B. von zwei unterschiedlichen Teilnehmereinheiten ausgehend bereitgestellte Daten zu übertragen oder von einer Teilnehmereinheit ausgehend bereitgestellte Daten an unterschiedliche weitere Teilnehmereinheiten zu übertragen, können weitere Telegrammbereiche zur Einfügung von diese unterschiedlichen Übertragungsabfolgen identifizierenden Kennungen in den Übertragungstelegrammen vorgesehen sein.

Die Prüfung auf Redundanz und Aktualität von Daten eines zyklisch zu übertragenden Datentyps innerhalb einer bestimmten zyklischen Übertragungsabfolge von Übertragungstelegrammen sowie das Einfügen von Daten eines azyklisch zu übertragenden Datentyps innerhalb dieser zyklischen Übertragungsabfolge von Übertragungstelegrammen erfolgt bevorzugt jeweils durch die Teilnehmereinheit, welche auch die Daten des zyklisch zu übertragenden Datentyps für diese bestimmte zyklische Übertragungsabfolge von Übertragungstelegrammen produziert oder bereitstellt. Da somit das Zwischenschalten einer weiteren Einheit, z.B. einer Master-Teilnehmereinheit, als Prüf- und/oder Entscheidungsinstanz entfällt, ist im wesentlichen jegliche Verzögerung bei der Datenübertragung eines zyklisch zu übertragenden Datentyps ausgeschlossen.

Eine solche Teilnehmereinheit, welche z.B. eine Mastereinheit oder eine Slaveeinheit sein kann, ist somit zur Durchführung der Erfindung zweckmäßigerweise zur Übertragung von Übertragungstelegrammen mit Daten eines zyklisch zu übertragenden Datentyps innerhalb einer protokollspezifisch zyklischen Übertragungsabfolge derartiger Übertragungstelegramme zu wenigstens einer weiteren an einen Übertragungskanal angeschalteten Teilnehmereinheit sowie zum Einfügen eines vordefinierten Bestandteils in das jeweils zu übertragende Übertragungstelegramm zum eindeutigen Kennzeichnen und Identifizieren des Übertragungstelegramms innerhalb der protokollspezifisch zyklischen Übertragungsabfolge ausgebildet. Sie ist ferner ausgebildet, in Reaktion auf die erfolgte Übertragung wenigstens eines bestimmten, innerhalb der Übertragungsabfolge jeweils an selber Stelle übertragenen Übertragungstelegramms die Daten des zyklisch zu übertragenden Datentyps, welche für das als nächstes in der Übertragungsabfolge zu übertragende Übertragungstelegramm bereitgestellt sind gegenüber den Daten des zyklisch zu übertragenden Datentyps dieses bestimmten Übertragungstelegramms auf Redundanz und Aktualität zu prüfen, Daten eines azyklisch übertragbaren Datentyps zu generieren und diese Daten anstelle der geprüften Daten des zyklisch zu übertragenden Datentyps in den für diesen Datentyp vorgesehenen Datenbereich in Reaktion auf das Erkennen der geprüften Daten als redundante Daten ohne neuen Informationsgehalt einzufügen.

## Patentansprüche

1. Verfahren zur Übertragung von Daten eines zyklisch zu übertragenden Datentyps und eines azyklisch übertragbaren Datentyps über einen gemeinsamen Übertragungskanal von einer ersten an den Übertragungskanal angeschalteten Teilnehmereinheit an wenigstens eine weitere an den Übertragungskanal angeschaltete Teilnehmereinheit,
- wobei eine protokollspezifisch zyklische Übertragungsabfolge von Übertragungstelegrammen mit Daten des zyklisch zu übertragenden Datentyps durchgeführt wird, und
- wobei eine Überprüfung von Daten des zyklisch zu übertragenden Datentyps durchgeführt wird,
**dadurch gekennzeichnet, dass**
- jeweils an wenigstens einer bestimmten Stelle innerhalb der protokollspezifisch zyklischen Übertragungsabfolge die mit dem unmittelbar zuvor übertragenen Übertragungstelegramm übertragenen Daten des zyklisch zu übertragenden Datentyps gegenüber den Daten des zyklisch zu übertragenden Datentyps, die für das unmittelbar bevorstehende Übertragungstelegramm bereitgestellt werden, auf Redundanz und Aktualität überprüft werden und,
- bei Erkennen eines solchen bevorstehenden Übertragungstelegramms, für welches redundante Daten des zyklisch zu übertragenden Datentyps ohne neuen Informationsgehalt vorgesehen sind, anstelle dieser Daten in den für Daten dieses zyklisch zu übertragenden Datentyps vorgesehenen Datenbereich Daten eines azyklisch übertragbaren Datentyps eingefügt werden.

2. Verfahren nach vorstehendem Anspruch, ferner **dadurch gekennzeichnet, dass** die Prüfung auf Redundanz und Aktualität von Daten eines zyklisch zu übertragenden Datentyps innerhalb einer bestimmten zyklischen Übertragungsabfolge von Übertragungstelegrammen sowie das Einfügen von Daten eines azyklisch übertragbaren Datentyps innerhalb dieser zyklischen Übertragungsabfolge von Übertragungstelegrammen jeweils durch die Teilnehmereinheit durchgeführt wird, welche die Daten des zyklisch zu übertragenden Datentyps für diese bestimmte zyklische Übertragungsabfolge von Übertragungstelegrammen bereitstellt.

3. Verfahren nach einem der vorstehenden Ansprüche, wobei jedem Übertragungstelegramm innerhalb der protokollspezifisch zyklischen Übertragungsabfolge eine bestimmte Stelle eindeutig zugewiesen wird und empfangene Übertragungstelegramme auf deren zugewiesene Stelle hin überprüft werden.

4. Verfahren nach vorstehendem Anspruch, wobei zur Kennzeichnung und Identifizierung der innerhalb einer zyklischen Übertragungsabfolge einem Übertragungstelegramm zugewiesenen Stelle ein vorgegebener Bestandteil im Übertragungstelegramm eingefügt wird.

5. Verfahren nach vorstehendem Anspruch, ferner **dadurch gekennzeichnet, dass** bei Übertragung des nach der bestimmten Stelle in der Übertragungsabfolge bevorstehenden Übertragungstelegramms, welches zur Übertragung auch von Daten eines azyklisch übertragbaren Datentyps verwendet wird, in Reaktion auf das Einfügen von azyklischen Daten der für dieses Übertragungstelegramm zur Kennzeichnung und Identifizierung vorgegebene Bestandteil vor Übertragung durch einen anderen vorgegebenen Bestandteil ersetzt wird.

6. Verfahren nach einem der Ansprüche 4 oder 5, ferner **dadurch gekennzeichnet, dass** die Anzahl der vorgegebenen Bestandteile durch die Summe der Anzahl der in einer Übertragungsabfolge zu übertragenden Übertragungstelegramme und der Anzahl von in dieser Übertragungsabfolge möglichen Übertragungstelegrammen, welche auch zur Übertragung von Daten eines azyklisch übertragbaren Datentyps verwendet werden, berechnet wird.

7. Verfahren nach einem der Ansprüche 4, 5 oder 6, ferner **dadurch gekennzeichnet, dass** als vorgegebene Bestandteile codierte Laufnummern verwendet werden.

8. Verfahren nach einem der Ansprüche 4 bis 7, ferner **dadurch gekennzeichnet, dass** für Übertragungstelegramme, die Daten eines azyklisch übertragbaren Datentyps enthalten die Änderung einer Codierung des vorgegebenen Bestandteils dieses Übertragungstelegramms zur Identifizierung einer Übertragung von Daten eines azyklisch übertragbaren Datentyps vorgenommen wird.

9. Verfahren nach einem der vorstehenden Ansprüche, ferner **dadurch gekennzeichnet, dass** die Teilnehmereinheiten über jeweils empfangene Daten eine Prüf- oder Checkinformation bilden und diese mit einer an den empfangenen Daten angehängten Prüf- oder Checkinformation vergleichen.

10. Verfahren nach einem der vorstehenden Ansprüche, ferner **dadurch gekennzeichnet, dass** als Daten eines zyklisch zu übertragenden Datentyps innerhalb einer zyklischen Übertragungsabfolge von Übertragungstelegrammen in Abhängigkeit der jeweiligen ersten Teilnehmereinheit Prozesseingangs- oder Prozessausgangsdaten bereitgestellt werden und als Daten eines azyklisch übertragbaren Datentyps Diagnose-, Anfrage-, Antwort und/oder Quittungsdaten generiert werden.

11. Verfahren nach einem der vorstehenden Ansprüche, welches bei der Steuerung oder Regelung eines sicherheitskritischen Prozesses angewendet wird.

12. Übertragungssystem mit zur Durchführung des Verfahrens nach einem der vorstehenden Ansprüche angepassten Teilnehmereinheiten, wobei wenigstens eine Teilnehmereinheit ausgebildet ist,
- zur Übertragung von Übertragungstelegrammen mit Daten eines zyklisch zu übertragenden Datentyps innerhalb einer protokollspezifisch zyklischen Übertragungsabfolge derartiger Übertragungstelegramme zu wenigstens einer weiteren, an einen Übertragungskanal angeschalteten Teilnehmereinheit,
und
- zur Überprüfung von Daten des zyklisch zu übertragenden Datentyps,
**dadurch gekennzeichnet, dass**
die wenigstens eine Teilnehmereinheit ferner ausgebildet ist
- in Reaktion auf die erfolgte Übertragung wenigstens eines bestimmten, innerhalb der Übertragungsabfolge jeweils an selber Stelle übertragenen Übertragungstelegramms, zum Prüfen der Daten des zyklisch zu übertragenden Datentyps, welche für das als nächstes in der Übertragungsabfolge zu übertragende Übertragungstelegramm bereitgestellt sind gegenüber den Daten des zyklisch zu übertragenden Datentyps dieses bestimmten Übertragungstelegramms auf Redundanz und Aktualität,
- zum Generieren von Daten eines azyklisch übertragbaren Datentyps und
- zum Einfügen dieser Daten anstelle der geprüften Daten des zyklisch zu übertragenden Datentyps in den für diese Daten vorgesehenen Datenbereich in Reaktion auf das Erkennen der geprüften Daten als redundante Daten ohne neuen Informationsgehalt.

13. Übertragungssystem nach vorstehendem Anspruch, bei welchem eine jeweilige Teilnehmereinheit
- zum Einfügen eines vordefinierten Bestandteils in das jeweils zu übertragende Übertragungstelegramm zum eindeutigen Kennzeichnen und Identifizieren des Übertragungstelegramms innerhalb der protokollspezifisch zyklischen Übertragungsabfolge ausgebildet ist.

14. Übertragungssystem nach einem der Ansprüche 12 oder 13, bei welchem eine jeweilige Teilnehmereinheit als Master oder Slave ausgebildet ist.

15. Übertragungssystem nach einem der Ansprüche 12 bis 14, bei welchem eine jeweilige Teilnehmereinheit als sicherheitsrelevante Teilnehmereinheit ausgebildet ist.

## Claims

1. Method of transmitting data of a data type which is to be transmitted cyclically and data of a data type which can be transmitted acyclically via a common transmission channel from a first participant unit connected to the transmission channel to at least one further participant unit connected to the transmission channel,
- wherein a protocol-specific cyclic transmission sequence of transmission telegrams with data of the data type to be transmitted cyclically is conducted, and
- wherein a verification of data of the data type to be transmitted cyclically is conducted,
**characterised in that**
- in each case at at least one specific position within the protocol-specific cyclic transmission sequence, the data of the data type to be transmitted cyclically which are transmitted with the transmission telegram transmitted immediately beforehand are verified for redundancy and currentness with respect to the data of the data type to be transmitted cyclically which are provided for the immediately impending transmission telegram, and
- upon detection of such an impending transmission telegram, for which redundant data of the data type to be transmitted cyclically are provided without new information content, instead of these data, data of a data type which can be transmitted acyclically are inserted into the data area which is provided for data of this data type which is to be transmitted cyclically.

2. Method as claimed in the preceding claim, further **characterised in that** the verification for redundancy and currentness of data of a data type to be transmitted cyclically within a specific cyclic transmission sequence of transmission telegrams and the insertion of data of a data type which can be transmitted acyclically within this cyclic transmission sequence of transmission telegrams are conducted in each case by the participant unit which provides the data of the data type to be transmitted cyclically for this specific cyclic transmission sequence of transmission telegrams.

3. Method as claimed in any one of the preceding claims, wherein a specific position is unequivocally assigned to each transmission telegram within the protocol-specific cyclic transmission sequence, and received transmission telegrams are verified in respect of their assigned position.

4. Method as claimed in the preceding claim, wherein a specified component is inserted in the transmission telegram in order to mark and identify the position assigned to a transmission telegram within a cyclic transmission sequence.

5. Method as claimed in the preceding claim, further **characterised in that** during the transmission of the transmission telegram which is impending downstream of the specific position in the transmission sequence and is used also for transmitting data of a data type which can be transmitted acyclically, the component which is specified for this transmission telegram for marking and identification purposes is replaced, prior to transmission, by another specified component in response to the insertion of acyclic data.

6. Method as claimed in any one of claims 4 or 5, further **characterised in that** the number of specified components is calculated by the sum of the number of transmission telegrams to be transmitted in a transmission sequence and the number of transmission telegrams which are possible in this transmission sequence and which are also used for transmitting data of a data type which can be transmitted acyclically.

7. Method as claimed in any one of claims 4, 5 or 6, further **characterised in that** coded sequence numbers are used as specified components.

8. Method as claimed in any one of claims 4 to 7, further **characterised in that** for transmission telegrams which contain data of a data type which can be transmitted acyclically, the change in coding of the specified component of this transmission telegram is performed in order to identify a transmission of data of a data type which can be transmitted acyclically.

9. Method as claimed in any one of the preceding claims, further **characterised in that** the participant units form verification or checking information via data received in each case and compare this information with verification or checking information attached to the received data.

10. Method as claimed in any one of the preceding claims, further **characterised in that** process input data or process output data are provided as data of a data type to be transmitted cyclically within a cyclic transmission sequence of transmission telegrams in dependence upon the respective first participant unit, and diagnostic, enquiry, response and/or acknowledgement data are generated as data of a data type which can be transmitted acyclically.

11. Method as claimed in any one of the preceding claims, which is applied in controlling or regulating a safety-critical process.

12. Transmission system having participant units which are adapted for conducting the method as claimed in any one of the preceding claims, wherein at least one participant unit is formed
- for transmitting transmission telegrams having data of a data type which is to be transmitted cyclically within a protocol-specific cyclic transmission sequence of such transmission telegrams to at least one further participant unit which is connected to a transmission channel, and
- for verifying data of the data type to be transmitted cyclically,
**characterised in that**
the at least one participant unit is further formed,
- in response to the effected transmission of at least one specific transmission telegram transmitted in each case at the same position within the transmission sequence, for verifying for redundancy and currentness of the data of the data type to be transmitted cyclically, which are provided for the transmission telegram to be transmitted next in the transmission sequence, with respect to the data of the data type to be transmitted cyclically of this specific transmission telegram,
- for generating data of a data type which can be transmitted acyclically, and
- for inserting these data, instead of the verified data of the data type, which is to be transmitted cyclically, into the data area provided for these data in response to the detection of the verified data as redundant data without new information content.

13. Transmission system as claimed in the preceding claim, in which a respective participant unit is formed
- for inserting a predefined component into the transmission telegram to be transmitted in each case in order to unequivocally mark and identify the transmission telegram within the protocol-specific cyclic transmission sequence.

14. Transmission system as claimed in any one of claims 12 or 13, in which a respective participant unit is formed as a master or slave.

15. Transmission system as claimed in any one of claims 12 to 14, in which a respective participant unit is formed as a safety-relevant participant unit.

## Revendications

1. Procédé pour transmettre des données d'un type de données à transmettre de façon cyclique et d'un type de données transmissibles de façon acyclique au moyen d'un canal de transmission commun d'une première unité d'abonné raccordée au canal de transmission à au moins une autre unité d'abonné raccordée au canal de transmission,
- une séquence de transmission, cyclique de façon spécifique au protocole, de télégrammes de transmission étant effectuée avec des données du type de données à transmettre de façon cyclique, et
- un contrôle de données du type de données à transmettre de façon cyclique étant effectué,
**caractérisé en ce que**
- à chaque fois les données, transmises avec le télégramme de transmission transmis juste avant, du type de données à transmettre de façon cyclique sont contrôlées au niveau de la redondance et du caractère actuel par rapport aux données du type de données à transmettre de façon cyclique, qui sont mises à disposition pour le télégramme de transmission imminent, en au moins un emplacement défini à l'intérieur de la séquence de transmission cyclique de façon spécifique au protocole et,
- en cas de détection d'un tel télégramme de transmission imminent, pour lequel des données redondantes du type de données à transmettre de façon cyclique sont prévues sans nouveau contenu d'information, des données d'un type de données transmissible de façon acyclique sont insérées à la place de ces données dans la zone de données prévue pour des données de ce type de données à transmettre de façon cyclique.

2. Procédé selon la revendication précédente, **caractérisé** également en ce que le contrôle de la redondance et du caractère actuel de données d'un type de données à transmettre de façon cyclique à l'intérieur d'une séquence de transmission cyclique définie de télégrammes de transmission et l'insertion de données d'un type de données transmissible de façon acyclique à l'intérieur de cette séquence de transmission cyclique de télégrammes de transmission sont effectués respectivement par l'unité d'abonné, qui met à disposition les données du type de données à transmettre de façon cyclique pour cette séquence de transmission cyclique définie de télégrammes de transmission.

3. Procédé selon l'une quelconque des revendications précédentes, un emplacement défini étant attribué clairement à chaque télégramme de transmission à l'intérieur de la séquence de transmission cyclique de façon spécifique au protocole et des télégrammes de transmission reçus étant contrôlés au niveau de leur emplacement attribué.

4. Procédé selon la revendication précédente, un élément prédéfini étant inséré dans le télégramme de transmission pour la caractérisation et l'identification de l'emplacement attribué à un télégramme de transmission à l'intérieur d'une séquence de transmission cyclique.

5. Procédé selon la revendication précédente, **caractérisé en outre en ce que**, en cas de transmission du télégramme de transmission imminent après l'emplacement défini dans la séquence de transmission, qui est utilisé pour la transmission également de données d'un type de données transmissible de façon acyclique, l'élément prédéfini pour ce télégramme de transmission pour la caractérisation et l'identification est remplacé avant la transmission par un autre élément prédéfini en réaction à l'insertion de données acycliques.

6. Procédé selon l'une quelconque des revendications 4 et 5, **caractérisé** également en ce que le nombre des éléments prédéfinis est calculé par la somme du nombre de télégrammes de transmission à transmettre dans une séquence de transmission et du nombre de télégrammes de transmission possibles dans cette séquence de transmission, qui sont utilisés également pour la transmission de données d'un type de données transmissible de façon acyclique.

7. Procédé selon l'une quelconque des revendications 4, 5 ou 6, **caractérisé** également en ce que des numéros d'ordre codés sont utilisés comme éléments prédéfinis.

8. Procédé selon l'une quelconque des revendications 4 à 7, **caractérisé** également en ce que, pour des télégrammes de transmission qui contiennent des données d'un type de données transmissible de façon acyclique, on procède à la modification d'un codage de l'élément prédéfini de ce télégramme de transmission pour l'identification d'une transmission de données d'un type de données transmissible de façon acyclique.

9. Procédé selon l'une quelconque des revendications précédentes, **caractérisé en outre en ce que** les unités d'abonnés forment une information de test ou de contrôle au moyen de données reçues respectivement et comparent cette information avec une information de test ou de contrôle attachée aux données reçues.

10. Procédé selon l'une quelconque des revendications précédentes, **caractérisé en outre en ce que** des données d'entrée de processus ou des données de sortie de processus sont mises à disposition comme données d'un type de données à transmettre de façon cyclique à l'intérieur d'une séquence de transmission cyclique de télégrammes de transmission en fonction de la première unité d'abonné respective et des données de diagnostic, de demande, de réponse et/ou d'accusé de réception sont générées comme données d'un type de données transmissible de façon acyclique.

11. Procédé selon l'une quelconque des revendications précédentes, qui est appliqué lors de la commande ou du réglage d'un processus critique au niveau de la sécurité.

12. Système de transmission avec des unités d'abonné adaptées pour la mise en oeuvre du procédé selon l'une quelconque des revendications précédentes, au moins une unité d'abonné étant conçue
- pour transmettre des télégrammes de transmission avec des données d'un type de données à transmettre de façon cyclique à l'intérieur d'une séquence de transmission, cyclique de façon spécifique au protocole, de tels télégrammes de données à au moins une autre unité d'abonné raccordée à un canal de transmission, et
- pour vérifier des données du type de données à transmettre de façon cyclique,
**caractérisé en ce que**
la au moins une unité d'abonné est conçue également
- pour contrôler la redondance et le caractère actuel des données du type de données à transmettre de façon cyclique, qui sont mises à disposition pour le prochain télégramme de transmission à transmettre dans la séquence de transmission, par rapport aux données du type de données à transmettre de façon cyclique de ce télégramme de transmission défini, en réaction à la transmission effectuée d'au moins un télégramme de transmission défini, transmis respectivement au même emplacement à l'intérieur de la séquence de transmission,
- pour générer des données d'un type de données transmissible de façon acyclique et
- pour insérer ces données au lieu des données testées du type de données à transmettre de façon cyclique dans la zone de données prévue pour ces données en réaction à la reconnaissance des données testées comme données redondantes sans nouvelle teneur en information.

13. Système de transmission selon la revendication précédente,
dans lequel une unité d'abonné respective est conçue
- pour insérer un élément prédéfini dans le télégramme de transmission à transmettre respectivement pour la caractérisation et l'identification claires du télégramme de transmission à l'intérieur de la séquence de transmission cyclique de façon spécifique au protocole.

14. Système de transmission selon l'une quelconque des revendications 12 e 13, dans lequel une unité d'abonné respective est conçue comme maître ou esclave.

15. Système de transmission selon l'une quelconque des revendications 12 à 14, dans lequel une unité d'abonné respective est conçue comme unité d'abonné importante au niveau de la sécurité.
